# EUROPÄISCHE PATENTSCHRIFT

(11) **EP 0 524 179 B1**
(45) Veröffentlichungstag und Bekanntmachung des Hinweises auf die Patenterteilung: **05.10.1994**
(21) Anmeldenummer: 91903895.0
(22) Anmeldetag: 15.02.1991
(51) Int. Cl.: G02B 26/02, G02B 6/36, B23K 26/00

(54) **VERFAHREN ZUM KONFEKTIONIEREN EINES LICHTWELLENLEITERSCHALTERS**
PROCESS FOR ASSEMBLING A WAVE GUIDE SWITCH
PROCEDE DE CONFECTION D'UN COMMUTATEUR DE GUIDE D'ONDES LUMINEUSES

(30) Priorität: 12.04.1990 DE 4012510
(43) Veröffentlichungstag der Anmeldung: 27.01.1993
(73) Patentinhaber: SIEMENS AKTIENGESELLSCHAFT, 80333 München (DE)
(72) Erfinder: MACZEY, Christoph, D-1000 Berlin 27 (DE); SCHULZE, Joachim, D-1000 Berlin 41 (DE); SCHULZ, Klaus, D-1000 Berlin 49 (DE)
(86) Internationale Anmeldenummer: DE9100130
(87) Internationale Veröffentlichungsnummer: WO9116651

(56) Entgegenhaltungen:
- EP-A- 0 064 751
- EP-A- 0 098 816
- EP-A- 0 298 260
- WO-A-90/04804
- US-A- 4 699 457
- Patent Abstracts of Japan, vol 12, no. 319, (P-751)(3166), 30 Augut 1988 & JP A 6385507
- Patent Abstracts of Japan, vol. 12, no. 464, (M-771)(3311), 6 December 1988 & JP A 63188485
- Patent Abstracts of Japan, vol. 12, no 112 (P-687)(2959), 9 April 1988 & JP A 62240918

## Beschreibung

Die Erfindung bezieht sich auf ein Verfahren zum Konfektionieren eines Schalters für Lichtwellenleiter mit zwei Gruppen von einander beiderseits einer quer zu den Längsachsen der Lichtwellenleiter verlaufenden Koppelebene gegenüberstehenden Lichtwellenleiterstirnflächen, bei dem mehrere die Koppelebene einstückig durchdringende Lichtwellenleiter in Zentriereinrichtungen befestigt werden, die von einem ersten Ende einer Grundplatte zu deren zweitem Ende parallel zueinander versatzlos verlaufen, und bei dem die Lichtwellenleiter in der Koppelebene und die Grundplatte im Bereich der Koppelebene durchtrennt werden.

Kommunikationsnetze, insbesondere lokale Datennetze, lassen sich besonders effektiv mit Hilfe optischer Datenübertragung durch Lichtwellenleiter realisieren. Für solche Datennetze werden Schaltstellen benötigt, mit denen sich bedarfsweise die Kopplung verschiedener Lichtwellenleiter realisieren läßt. Als Schalter für Lichtwellenleiter sind u. a. solche bekannt, bei denen die stirnseitig zu koppelnden Lichtwellenleiter in einem Schaltzustand fluchtend zueinander ausgerichtet und in einem anderem Schaltzustand radial gegeneinander versetzt sind.

Ein solcher Lichtwellenleiterschalter ist beispielsweise aus der DE-OS-37 41 761 bekannt. Bei dem dort beschriebenen Schalter sind je drei Lichtwellenleiter auf einem festen und einem antreibbaren Teil des Schalters nebeneinander parallel zueinander befestigt. Das antreibbare Schaltstück ist senkrecht zur Längsachse der Lichtwellenleiter beweglich, so daß wahlweise unterschiedliche Lichtwellenleiterpaare miteinander gekoppelt werden können. Die Stirnflächen zweier zu koppelnder Lichtwellenleiter sollen zueinander in möglichst geringem Kopplungsabstand gegenüberstehen, um eine gute Kopplungsqualität mit geringer Dämpfung zu erreichen.

Aus der E 0 098 816 ist ein Verfahren zum Herstellen von Teilen eines optischen Schalters der eingangs genannten Art bekannt, bei dem zuerst einstückige Lichtwellenleiter in Zentriernuten einer einstückigen Grundplatte befestigt und darauf gemeinsam mit dieser mittels eines Schneidwerkzeuges durchtrennt werden. Danach können die getrennten Teile in einen Schalter eingebaut werden.

Der Erfindung liegt die Aufgabe zugrunde, ein rationelles Verfahren zur Konfektionierung eines solchen Lichtwellenleiterschalters zu schaffen, mittels dessen auch der Kopplungsabstand der Lichtwellenleiterstirnflächen reproduzierbar festgelegt wird.

Die Aufgabe wird erfindungsgemäß dadurch gelöst, daß zuerst die Grundplatte mit ihrem ersten Ende an einem unbeweglichen Teil des Schalters und mit ihrem zweiten Ende an einem antreibbaren Teil des Schalters befestigt wird, während der Schalter sich in einer definierten Schaltstellung befindet und daß danach die Lichtwellenleiter und die Grundplatte durchtrennt werden, wobei die Lichtwellenleiter mittels eines Laserstrahls durchtrennt werden.

Der Schalter ist bereits mit einer Antriebsvorrichtung und mit einem festen und einem beweglichen Schaltstück versehen. Die Antriebseinrichtung kann beispielsweise aus einem Elektromagneten bestehen und das bewegliche Schaltstück kann als Magnetanker ausgebildet sein. In dem soweit fertiggestellten Schalter wird eine Grundplatte befestigt, und zwar so, daß die auf ihr versatzlos verlaufenden Zentriereinrichtungen, beispielsweise Zentriernuten, von dem ersten Ende der Grundplatte, das mit einem unbeweglichen Teil des Schalters verbunden ist, zu dem zweiten Ende der Grundplatte verlaufen, das mit dem antreibbaren Teil des Schalters, z. B. direkt mit einem beweglichen Schaltstück, verbunden ist. Die Grundplatte wird beispielsweise mittels eines Klebers in dem Schalter befestigt. Der Kleber kann auch Toleranzen ausgleichen, so daß die Grundplatte unabhängig von Höhenunterschieden zwischen dem unbeweglichen Teil des Schalters und dem antreibbaren Teil sicher befestigt werden kann.

Während der Befestigung der Grundplatte befindet sich der Schalter in einem definierten Schaltzustand. Die den Bereich der Koppelebene durchdringenden Lichtwellenleiter werden vor oder nach dem Befestigen der Grundplatte in dem Schalter in den Zentriereinrichtungen fixiert. Nach dem Befestigen der Grundplatte werden die Lichtwellenleiter mittels eines Lasers in der Koppelebene durchtrennt. Über die optischen Parameter, insbesondere die geometrischen Parameter des Laserstrahls läßt sich die Schnittbreite einstellen, in der die Lichtwellenleiter durchtrennt werden. Diese Schnittbreite läßt sich auf wenige µm genau einhalten. Dadurch kann der gewünschte Kopplungsabstand von beispielsweise 10 µm zwischen den Faserstirnflächen genau eingehalten werden. Ein solcher Kopplungsabstand von 10 µm ist deshalb wünschenswert, weil er einerseits groß genug ist, um beim Bewegen des Schalters die gegenseitige Berührung der Faserstirnflächen zu vermeiden, andererseits aber klein genug, um eine gute Kopplung der Lichtwellenleiter zu gewährleisten.

Nach dem Durchtrennen der Lichtwellenleiter wird noch die Grundplatte im Bereich der Koppelebene durchtrennt. Von diesem Zeitpunkt an können die beiden Teile des Schalters gegeneinander bewegt werden, so daß unterschiedliche Paare von Lichtwellenleitern miteinander gekoppelt werden können.

Da während des Befestigens der Grundplatte der Schalter sich in einer definierten Schaltstellung befindet und da die Zentriereinrichtungen auf der Grundplatte versatzlos verlaufen, werden die Lichtwellenleiter nach der Trennung in dieser Schaltstellung automatisch fluchtend zueinander ausgerichtet. Sollen in einer anderen Schaltstellung jeweils andere Lichtwellenleiterpaare miteinander gekoppelt werden, so ist ein Anschlag zur Definition eines zweiten Schaltzustandes notwendig, der nachträglich justiert werden muß.

Das Durchtrennen der Grundplatte im Bereich der Koppelebene kann beispielsweise durch Brechen an einer Sollbruchstelle oder durch das Heraustrennen eines Streifens zwischen zwei Sollbruchstellen im Bereich der Koppelebene geschehen.

Die Erfindung kann vorteilhaft dadurch ausgestaltet werden, daß die Grundplatte mittels eines Laserstrahls durchtrennt wird.

Durch die Verwendung eines Lasersstrahls läßt sich die Grundplatte kraftfrei exakt durchtrennen. Dabei entstehen genügend glatte Trennflächen, die einen über die Laserparameter einstellbaren Abstand voneinander aufweisen. Dadurch wird die gegenseitige Berührung dieser Trennflächen beim Schaltvorgang verhindert. Da das Material beim Durchtrennen der Grundplatte durch den Laser verdampft wird, fallen auch keine Bruchstücke an, die den Schaltvorgang behindern und den Schalter verschmutzen könnten. Die Grundplatte kann auch in einem einzigen Arbeitsgang gleichzeitig mit den Lichtwellenleitern mittels eines Lasers durchtrennt werden.

Es kann auch vorteilhaft sein, die Grundplatte früher als die Lichtwellenleiter zu durchtrennen. Dadurch wird verhindert, daß das verdampfte Material der Grundplatte sich auf den freiliegenden Stirnflächen der Lichtwellenleiter absetzt und durch eine Verschmutzung der Stirnflächen die Kopplungsdämpfung vergrößert.

Eine besonders gute Qualität der Lichtwellenleiterstirnflächen ergibt sich dadurch, daß die Lichtwellenleiter mitsamt ihrem Coating in der Koppelebene mittels eines Laserstrahls durchtrennt werden. Die Lichtwellenleiter können auch vor dem Durchtrennen im Bereich der Koppelebene von ihrem Coating befreit und mit einem Kunststoff umhüllt werden. Durch die Umhüllung der Lichtwellenleiter mit dem Coating oder mit einem aufgebrachten Kunststoff wird ein Ausbrechen an den Lichtwellenleiterstirnflächen während der Lasertrennung verhindert, und es werden Flächen von optisch sehr guter Qualität erzeugt.

Es erweist sich als vorteilhaft, daß der Kunststoff in flüssiger Form auf die Lichtwellenleiter aufgebracht wird. Es wird ein Tropfen des Kunststoffs im Bereich der Koppelebene auf jeden Lichtwellenleiter aufgebracht, wo er durch Adhäsion haftet. Der Kunststoff kann mittels einer kammartigen Anordnung auf alle Lichtwellenleiter gleichzeitig aufgebracht werden.

Um ein Herabtropfen eines Kunststoffs von einem Lichtwellenleiter vor der Anwendung des Lasers zu verhindern, erweist es sich als vorteilhaft, daß als Kunststoff ein Kleber verwendet wird. Dieser Kleber soll aushärten, bevor der Tropfen von dem Lichtwellenleiter herabfallen kann. In dem Fall, daß als Kunststoff ein UV-härtbarer Kleber verwendet wird, läßt sich der Tropfen direkt nach dem Aufbringen durch UV-Bestrahlung härten und fixieren.

Die Erfindung bezieht sich weiterhin auf eine Grundplatte zur Verwendung im Verfahren nach Anspruch 1 oder einem der folgenden, die im Bereich der Koppelebene eine fensterartige, durchgehende Ausnehmung aufweist, die zwei beidseits parallel zu den Lichtwellenleitern verlaufende Stege der Grundplatte stehen läßt.

Für den Fall, daß die Grundplatte an Sollbruchstellen durchbrochen wird, ist durch die Ausnehmung im Bereich der Koppelebene sicnergestellt, daß nicht durch anfallende Bruchstücke die Stirnflächen der zu koppelnden Lichtwellenleiter verschmutzt werden. Auch bei einer Durchtrennung der Grundplatte mittels eines Lasers wird die Verschmutzung cer Lichtwellenleiterstirnflächen verringert, ca im Bereicn der Lichtwellenleiter kein Material cer Grundplatte durch den Laser zu verdampfen ist.

Die Grundplatte läßt sich besonders leicnt bearbeiten, wenn sie aus Silizium besteht. Es lassen sich in das Silizium durch antisotropes Ätzen leicht sehr exakte durchgehende Zentriernuten einbringen. Auch die eventuell notwendigen Sollbruchstellen in der Grundplatte lassen sich in einer Siliziumplatte durch eingeätzte Nuten leicht verwirklichen.

Im folgenden wird die Erfindung anhand eines Ausführungsbeispiels in einer schematischen Zeichnung gezeigt und anschließend beschrieben. Dabei beschränkt sich die Anwendung der Erfindung nicht auf das gezeigte Ausführungsbeispiel.

Es zeigt
- Figur 1: eine Ansicht einer Grundplatte in einem Lichtwellenleiterschalter,
- Figur 2: einen Querschnitt durch die Grundplatte mit ihrer Halterung und
- Figur 3: eine vergrößerte Ansicht des Bereiches der Koppelebene mit, teilweise getrennten, teilweise noch nicht getrennten Lichtwellenleitern.

Die Grundplatte 1, die aus Silizium besteht, weist Zentriernuten 2, 3, 4 auf, in denen Lichtwellenleiter 5, 6, 7 mittels eines Klebers fixiert sinc. Die Grundplatte 1 weist eine fensterartige Ausnehmung 8 im Bereich der Koppelebene 9 auf. Die Ausnehmung läßt beidseits der Lichtwellenleiter 5, 6, 7 parallel zu diesen zwei Stege 10, 11 der Grundplatte 1 stehen. die in den Nuten 2, 3, 4 fixierten Lichtwellenleiter 5, 6, 7 durchdringen jeweils einstückig die Koppelebene 9.

Die Grundplatte 1 mit den an ihr fixierten Lichtwellenleitern 5, 6, 7 wird in einem Schalter 12 derart befestigt, daß das erste Ende 13 der Grundplatte 1 mit einem unbeweglichen Teil 14 des Schalters verbunden ist, während das zweite Ende 15 der Grundplatte 1 mit dem beweglichen Schaltstück 16 des Schalters verbunden wird. die Verbindung wird mittels eines Klebers 17 hergestellt, der gleichzeitig als Toleranzausgleich für eventuelle Höhenunterschiede zwischen dem unbeweglichen Teil 14 des Schalters und dem beweglichen Schaltstück 16 dient. Während des Befestigens der Grundplatte 1 an diesen beiden Teilen des Schalters 12 befindet sich der Schalter 12 in einer definierten Schaltposition, bei der das bewegliche Schaltstück 16 an dem festen Anschlag 26 des Schalters 12 anliegt.

Nach der Befestigung der Grundplatte 1 in dem Schalter 12 werden die Stege 10, 11 der Grundplatte 1 sowie die Lichtwellenleiter 5, 6, 7 in der Koppelebene 9 mittels eines Lasers durchtrennt. Dabei ist es wichtig, daß das Coating 18 der Lichtwellenleiter bis zur Durchtrennung mit dem Laser an der Trennstelle erhalten bleibt. Es kann allerdings auch anstelle des Coatings 18 ein anderer Kunststoff, beispielsweise in Form eines Tropfens 19 an der Trennstelle auf die Lichtwellenleiter 5, 6, 7 aufgebracht werden.

Durch die Anwesenheit des Coatings oder eines Kunststofftropfens an der Trennstelle wird beim Trennen mittels eines Lasers eine hervorragende Qualität der Lichtwellenleiterstirnflächen erreicht. Das Aussplittern von Glas an den Stirnflächen wird vermieden. Dadurch wird eine gute Kopplungsqualität bei der Lichtwellenleiterkopplung erreicht.

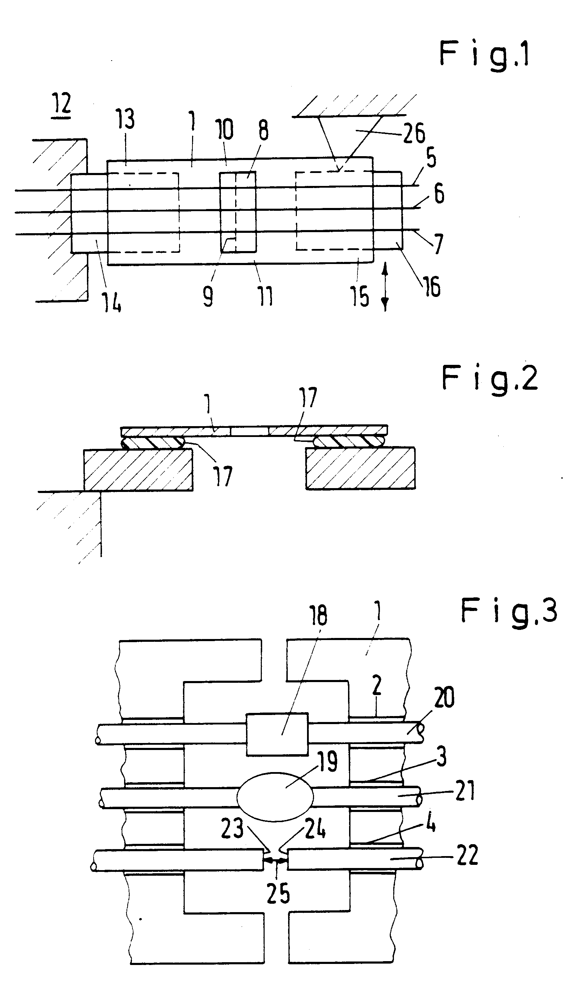

Die Figur 3 zeigt in einer stark vergrößerten und im Maßstab verzerrten Abbildung drei Lichtwellenleiter 20, 21, 22, wovon die Lichtwellenleiter 20, 21 noch nicht durchtrennt sind, während der Lichtwellenleiter 22 bereits mit einem Laser durchtrennt wurde. Der Lichtwellenleiter 20 ist im Trennbereich noch mit seinem Coating 18 versenen, währena der Lichtwellenleiter 21 nachträglich mit einem Kunststofftropfen an der Trennstelle versehen wurde. Bei dem Lichtwellenleiter 22 ist durch das Trennen mittels eines Lasers das Coating im Bereich der Trennstelle zum Teil verdampft und es wuroe durch die Lasertrennung eine gute Oberflächenqualität der Lichtwellenleiterstirnflächen 23, 24 erreicht.

Oft werden die Lichtwellenleiter vor dem Einlegen in Zentriernuten von ihrem Coating befreit. In diesem Falle kann im Bereich der Trennstelle wegen der fensterartigen Ausnehmung 8 in der Grundplatte 1 das Coating 18 stehengelassen werden. In diesem Fall ist kein nachträgliches Aufbringen eines Kunststoffes auf die Lichtwellenleiter mehr notwendig.

Der Kopplungsabstand 25 zwischen den Faserstirnflächen 23, 24 ist durch entsprechende Wahl der Parameter des Lasers auf wenige µm genau einstellbar. Er kann beispielsweise in der Größe von 10 µm gewählt werden. Dieser Abstand ist besonders vorteilhaft, da er groß genug ist, um eine freie Bewegung der Lichtwellenleiter während des Schaltvorganges ohne gegenseitige Berührung zu gewährleisten und gleichzeitig noch nicht so groß, daß er eine zu hohe Kopplungsdämpfung bewirkt.

Nachdem die Lichtwellenleiter 5, 6, 7 sowie die Grundplatte 1 durchtrennt sind, ist der Schalter betätigbar. Sollen in einem anderen Schaltzustand, als dem, in dem die Grundplatte 1 in dem Schalter 12 befestigt wurde, jeweils andere Lichtwellenleiterpaare miteinander gekoppelt werden, so ist es notwendig, einen zweiten Anschlag als Gegenstück zu dem Anschlag 26 so einzustellen, daß in einer zweiten Schaltposition jeweils andere Lichtwellenleiterpaare fluchtend zueinancer ausgerichtet werden, als in der ersten Schaltposition.

## Patentansprüche

1. Verfahren zum Konfektionieren eines Schalters für Lichtwellenleiter mit zwei Gruppen von einander beiderseits einer quer zu den Längsachsen der Lichtwellenleiter verlaufenden Koppelebene gegenüberstehenden Lichtwellenleiterstirnflächen, bei dem mehrere die Koppelebene einstückig durchdringende Lichtwellenleiter in Zentriereinrichtungen befestigt werden, die von einem ersten Ende einer Grundplatte zu deren zweitem Ende parallel zueinander versatzlos verlaufen, und bei dem die Lichtwellenleiter in der Koppelebene und die Grundplatte im Bereich der Koppelebene durchtrennt werden
**dadurch gekennzeichnet,**
- daß zuerst die Grundplatte (1) mit ihrem ersten Ende (13) an einem unbeweglichen Teil (14) des Schalters (12) und mit ihrem zweiten Ende (15) an einem antreibbaren Teil (16) des Schalters (12) befestigt wird, während der Schalter (12) sich in einer definierten Schaltstellung befindet und
- daß danach die Lichtwellenleiter (5, 6, 7; 20, 21, 22) und die Grundplatte (1) durchtrennt werden, wobei die Lichtwellenleiter (5, 6, 7, 20, 21, 22) mittels eines Laserstrahls durchtrennt werden.

2. Verfahren nach Anspruch 1, **dadurch gekennzeichnet,** daß die Grundplatte (1) mittels eines Laserstrahls durchtrennt wird.

3. Verfahren nach Anspruch 2, **dadurch gekennzeichnet,** daß die Grundplatte (1) früher als die Lichtwellenleiter (5, 6, 7; 20, 21, 22) durchtrennt wird.

4. Verfahren nach Anspruch 1, 2 oder 3, **dadurch gekennzeichnet,** daß die Lichtwellenleiter (5, 6, 7; 20, 21, 22) mitsamt ihrem Coating (18) in der Koppelebene (9) mittels eines Laserstrahls durchtrennt werden.

5. Verfahren nach Anspruch 1, 2 oder 3, **dadurch gekennzeichnet,** daß die Lichtwellenleiter (5, 6, 7; 20, 21, 22) vor dem Durchtrennen im Bereich der Koppelebene (9) von ihrem Coating (18) befreit und mit einem Kunststoff umhüllt werden.

6. Verfahren nach Anspruch 5, **dadurch gekennzeichnet,** daß der Kunststoff in flüssiger Form auf die Lichtwellenleiter (5, 6, 7; 20, 21, 22) aufgebracht wird.

7. Verfahren nach Anspruch 6, **dadurch gekennzeichnet,** daß als Kunststoff ein Kleber verwendet wird.

8. Verfahren nach Anspruch 7, **dadurch gekennzeichnet**, daß als Kunststoff ein UV-härtbarer Kleber verwendet wird.

9. Grundplatte zur Verwendung im Verfahren nach Anspruch 1 oder einem der folgenden,
**dadurch gekennzeichnet,** daß die Grundplatte (1) im Bereich der Koppelebene (9) eine fensterartige, durchgehende Ausnehmung (8) aufweist, die zwei beidseits parallel zu den Lichtwellenleitern (5, 6, 7; 20, 21, 22) verlaufende Stege (10, 11) der Grundplatte (1) stehen läßt.

10. Grundplatte nach Anspruch 9, **dadurch gekennzeichnet,** daß die Grundplatte (1) aus Silizium besteht.

## Claims

1. Process for assembling a waveguide switch for optical waveguides, with two groups of optical waveguide end faces standing opposite one another on both sides of a coupling interface running transverse to the longitudinal axes of the optical waveguides, in which several optical waveguides penetrating the coupling interface in one piece are fastened in centring devices, which run parallel to one another without any offset from a first end of a baseplate to its second end, and in which the optical waveguides at the coupling interface and the baseplate in the area of the coupling interface are cut through, characterized in that
- first the baseplate (1) is fastened with its first end (13) at a fixed part (14) of the switch (12) and with its second end (15) at an actuatable part (16) of the switch (12), while the switch (12) is located in a definite position and
- thereafter the optical waveguides (5, 6, 7; 20, 21, 22) and the baseplate (1) are cut through, the optical waveguides (5, 6, 7, 20, 21, 22) being cut through by means of a laser beam.

2. Process according to claim 1, characterized in that the baseplate (1) is cut through by means of a laser beam.

3. Process according to claim 2, characterized in that the baseplate (1) is cut through prior to the optical waveguides (5, 6, 7; 20, 21, 22).

4. Process according to claim 1, 2 or 3, characterized in that the optical waveguides (5, 6, 7; 20, 21, 22) together with their coating (18) are cut through at the coupling interface (9) by means of a laser beam.

5. Process according to claim 1, 2 or 3, characterized in that the optical waveguides (5, 6, 7; 20, 21, 22) are freed from their coating (18) in the area of the coupling interface (9) and are sheathed using a synthetic material prior to cutting.

6. Process according to claim 5, characterized in that the synthetic material is applied to the optical waveguides (5, 6, 7; 20, 21, 22) in liquid form.

7. Process according to claim 6, characterized in that a bonding agent is used as the synthetic material.

8. Process according to claim 7, characterized in that a UV-curable bonding agent is used as the synthetic material.

9. Baseplate for use in the process according to claim 1 or any one of the following claims, characterized in that the baseplate (1) in the area of the coupling interface (9) has a window-like, through aperture (8), which permits two webs (10, 11) of the baseplate (1) running on both sides parallel to the optical waveguides (5, 6, 7; 20, 21, 22) to stand.

10. Baseplate according to claim 9, characterized in that the baseplate (1) consists of silicon.

## Revendications

1. Procédé de fabrication d'un commutateur de guides d'ondes lumineuses, comportant deux groupes de surfaces frontales de guides d'ondes lumineuses, qui sont situées en vis-à-vis les unes des autres des deux côtés d'un plan de couplage qui s'étend transversalement aux axes longitudinaux des guides d'ondes lumineuses, et selon lequel on fixe plusieurs guides d'ondes lumineuses, qui traversent d'un seul tenant le plan de couplage, dans des dispositifs de centrage, qui s'étendent parallèlement et sans décalage mutuel d'une première extrémité d'une plaque de base à une seconde extrémité, et selon lequel on sectionne les guides d'ondes lumineuses dans le plan de couplage et la plaque de base au voisinage du plan de couplage, caractérisé par le fait
- qu'on fixe tout d'abord la plaque de base (1) par sa première extrémité (13) à une partie immobile (14) du commutateur (12) et par sa seconde extrémité (15) à une partie (16), qui peut être entraînée, du commutateur (12), alors que ce dernier se trouve dans une position de commutation définie, et
- qu'ensuite on sectionne les guides d'ondes lumineuses (5, 6, 7; 20, 21, 22) et la plaque de base (1), les guides d'ondes lumineuses (5, 6, 7, 20, 21, 22) étant sectionnés au moyen d'un faisceau laser.

2. Procédé suivant la revendication 1, caractérisé par le fait qu'on sectionne la plaque de base (1) au moyen d'un faisceau laser.

3. Procédé suivant la revendication 2, caractérisé par le fait qu'on sectionne la plaque de base (1) avant de sectionner les guides d'ondes lumineuses (5, 6, 7; 20, 21, 22).

4. Procédé suivant la revendication 1, 2 ou 3, caractérisé par le fait qu'on sectionne les guides d'ondes lumineuses (5, 6, 7; 20, 21, 22) ainsi que leur gaine (18) dans le plan de couplage (9), au moyen d'un faisceau laser.

5. Procédé suivant la revendication 1, 2 ou 3, caractérisé par le fait qu'on retire la gaine (18) de guides d'ondes lumineuses (5, 6, 7; 20, 21, 22) avant leur sectionnement dans la zone du plan de couplage (9) et qu'on les enveloppe d'une matière plastique.

6. Procédé suivant la revendication 5, caractérisé par le fait qu'on dépose la matière plastique sous forme liquide sur les guides d'ondes lumineuses (5, 6, 7; 20, 21, 22).

7. Procédé suivant la revendication 6, caractérisé par le fait qu'on utilise une colle en tant que matière plastique.

8. Procédé suivant la revendication 7, caractérisé par le fait qu'on utilise une colle durcissable aux ultraviolets en tant que matière plastique.

9. Plaque de base destinée à être utilisée dans le procédé suivant la revendication 1 ou l'une des suivantes, caractérisée par le fait que la plaque de base (1) possède, dans la zone du plan de couplage (9), un évidement continu en forme de fenêtre (8), qui laisse subsister deux barrettes (10, 11) de la plaque de base (1), qui s'étendent des deux côtés parallèlement au guide d'ondes lumineuses (5, 6, 7; 20, 21, 22).

10. Plaque de base suivant la revendication 9, caractérisée par le fait que la plaque de base (1) est en silicium.
